(19) Europäisches Patentamt / European Patent Office / Office européen des brevets

(11) **EP 3 855 009 A1**

(12) **DEMANDE DE BREVET EUROPEEN**

(43) Date de publication:
28.07.2021 Bulletin 2021/30

(51) Int Cl.:
*F02D 41/14* (2006.01)     *F02D 23/02* (2006.01)
*F02B 37/24* (2006.01)

(21) Numéro de dépôt: 21152070.5

(22) Date de dépôt: 18.01.2021

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME
Etats de validation désignés:
KH MA MD TN

(30) Priorité: 21.01.2020 FR 2000568

(71) Demandeur: RENAULT s.a.s.
92100 Boulogne-Billancourt (FR)

(72) Inventeurs:
• SMIS-MICHEL, VIVIEN
91700 SAINTE GENEVIEVE DES BOIS (FR)
• SANBI, ICHRAK
91220 BRETIGNY SUR ORGE (FR)

(54) **DISPOSITIF ET PROCÉDÉ DE RÉGULATION D'UNE TEMPÉRATURE AVAL D'UN FLUX DE FLUIDE TRAVERSANT UN COMPRESSEUR D'UN MOTEUR À COMBUSTION INTERNE**

(57)     Ce dispositif de régulation (76) d'une température aval d'un flux de fluide traversant un compresseur (10) d'un moteur à combustion interne de véhicule automobile comprend un moyen de détermination d'une température ($T_{avc}$) du flux de fluide, un module d'élaboration (78) d'une consigne et un moyen d'actionnement apte à modifier un paramètre du flux de fluide en tenant compte de la consigne.

Le module d'élaboration (78) détermine une consigne de pression aval ($P_{apc,sp}$) du flux de fluide en tenant compte d'une température limite aval ($T_{apc,max}$) et de la température ($T_{avc}$) déterminée par le moyen de détermination, le moyen d'actionnement étant apte à modifier une pression aval du flux de fluide.

[Fig 3]

**Description**

La présente invention concerne un dispositif et un procédé de régulation d'une température aval d'un flux de fluide traversant un compresseur d'un moteur à combustion interne, notamment destiné être incorporé dans un véhicule automobile.

Dans un véhicule automobile, le contrôle moteur est la technique de gestion d'un moteur à combustion interne du véhicule avec l'ensemble de ses capteurs et actionneurs. L'ensemble des lois de contrôle commande et des paramètres de caractérisation d'un moteur est contenu dans un calculateur appelé unité de contrôle électronique, également connu sous l'acronyme « UCE ».

Une des problématiques rencontrées par l'unité de contrôle électronique dans le cadre du contrôle moteur comprend la régulation de la température aval du flux de fluide traversant le compresseur du turbocompresseur du moteur à combustion interne.

La régulation de cette température est particulièrement importante car une température aval inadaptée peut impliquer des problèmes de fiabilité des composants de la chaîne d'admission du moteur à combustion interne. En particulier, la volute du compresseur peut se dilater sous l'effet d'une température aval trop élevée. Par ailleurs, les tuyaux d'admission, qui sont souvent réalisés en plastique, sont très sensibles à des gaz circulant à une température trop élevée.

Pour limiter le risque d'une température trop élevée du flux de fluide en aval du compresseur, il a été proposé de mettre en œuvre un mode dégradé du moteur par intervalles. On pourra par exemple se rapporter au document doté EP 3 330 520 qui écrit un exemple de mise en œuvre d'un mode dégradé d'un moteur. Toutefois, une telle solution n'apporte pas pleine satisfaction dans la mesure où elle implique des temps de réponse plus longs, une adaptation de mise au point difficile et altère considérablement l'agrément du conducteur. Dans le cas du document EP 3 330 520, le mode dégradé du moteur se traduit par un arrêt moteur complet.

Au vu de ce qui précède, l'invention a pour but de permettre une régulation plus fiable d'une température aval d'un flux de fluide traversant un compresseur qui soit simple à mettre en œuvre, qui ait un faible impact sur les émissions du moteur à combustion interne et qui n'occasionne pas de désagrément pour le conducteur.

A cet effet, il est proposé un dispositif de régulation d'une température aval d'un flux de fluide traversant un compresseur d'un moteur à combustion interne de véhicule automobile, comprenant un moyen de détermination d'une température du flux de fluide, un module d'élaboration d'une consigne et un moyen d'actionnement apte à modifier un paramètre du flux de fluide en tenant compte de la consigne.

Selon une des caractéristiques générales de ce dispositif, le module d'élaboration est configuré pour déterminer une consigne de pression aval du flux de fluide en tenant compte d'une température limite aval et de la température déterminée par le moyen de détermination, le moyen d'actionnement étant apte à modifier une pression aval du flux de fluide

Un tel dispositif permet de réguler la température par une régulation de la pression aval. Il en résulte une régulation plus simple et plus confortable que les régulations de température existantes.

Selon un mode de réalisation, le moyen d'actionnement comprend un actionneur mécaniquement connecté avec au moins une ailette de turbine à géométrie variable du moteur à combustion interne.

De préférence, le moyen de détermination comprend un capteur d'une température amont du flux de fluide.

Avantageusement, le module d'élaboration comprend un bloc de réception d'une pré-consigne de pression aval, le module d'élaboration étant apte à calculer une pression aval maximale en tenant compte de la pré-consigne de pression aval et de la température limite aval, le module d'élaboration comprenant un bloc de sélection configuré pour calculer la consigne en sélectionnant la valeur minimale parmi la pression aval maximale et la pré-consigne de pression aval.

De préférence, le module d'élaboration comprend un premier bloc de calcul apte à déterminer une pression aval maximale avant correction en fonction de la température limite aval, un deuxième bloc de calcul apte à calculer un terme de correction en tenant compte de la température limite aval, et un sommateur configuré pour calculer la pression aval maximale comme la somme de la pression aval maximale avant correction calculée par le premier bloc de calcul et du terme de correction calculé par le deuxième bloc de calcul.

Avantageusement, le deuxième bloc de calcul comprend un correcteur proportionnel intégral.

Dans un mode de réalisation, le module d'élaboration comprend un troisième bloc de calcul d'une consigne de température aval modélisée pour tenir compte d'un temps de réponse du moyen de détermination, le deuxième bloc de calcul étant configuré pour calculer le terme de correction en tenant compte de la consigne de température aval modélisée calculée par le troisième bloc de calcul.

On peut en outre prévoir que le module d'élaboration comprend un quatrième bloc de calcul d'une consigne de température aval en fonction de la température déterminée par le moyen de détermination et de la pré-consigne de pression aval, le troisième bloc de calcul étant configuré pour calculer la consigne de température aval modélisée en fonction de la consigne de température aval calculée par le quatrième bloc de calcul.

Selon un autre aspect, il est proposé un procédé de régulation d'une température aval d'un flux de fluide traversant un compresseur incorporé dans un moteur à combustion interne de véhicule automobile, comprenant la détermination d'une température du flux de fluide, l'élaboration d'une consigne de pression aval en tenant compte d'une température limite aval et de la température déterminée, et l'actionnement d'un moyen d'actionnement apte à modifier une pression aval en tenant compte de la consigne déterminée.

Selon encore un autre aspect, il est proposé un programme d'ordinateur comprenant un code configuré pour, lorsqu'il est exécuté par un processeur ou une unité de contrôle électronique, mettre en œuvre le procédé tel que défini précédemment.

D'autres buts, caractéristiques et avantages de l'invention apparaîtront la lecture de la description suivante, donnée uniquement à titre d'exemple non limitatif, et faite en référence aux dessins indexés sur lesquels :

[Fig 1] représente schématiquement un moteur à combustion interne selon un aspect de l'invention,
[Fig 2] illustre schématiquement un dispositif de régulation d'une température aval du flux de fluide traversant le compresseur du moteur de la figure 1, et
[Fig 3] représente schématiquement un module d'élaboration du dispositif de régulation de la figure 2.

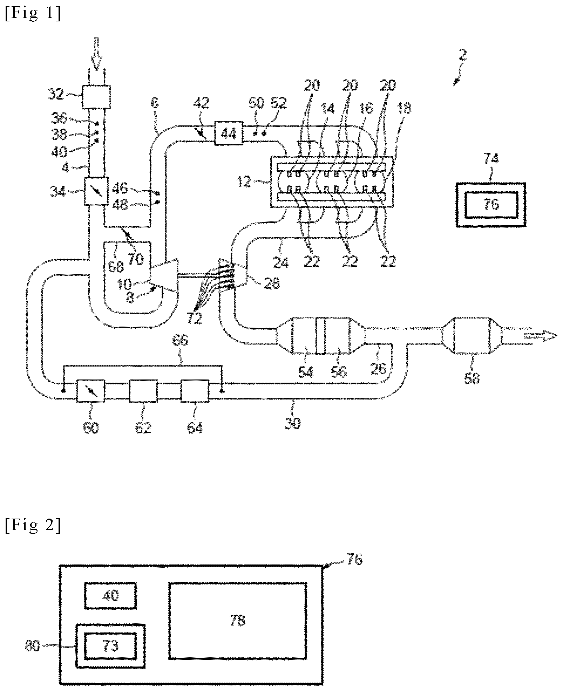

En référence à la figure 1, on a schématiquement représenté une partie d'un moteur à combustion interne 2 selon un aspect de la présente invention. Le moteur à combustion interne 2 est un moteur suralimenté. Le moteur à combustion interne 2 est destiné à être incorporé dans un véhicule automobile. Toutefois, on peut sans sortir du cadre de l'invention envisager d'incorporer le moteur à combustion interne 2 dans un autre type de dispositif, en particulier un dispositif de transport avec motorisation suralimentée, par exemple dans le domaine naval ou dans le domaine ferroviaire.

Le moteur 2 comprend un conduit d'admission basse pression 4 et un conduit d'admission haute pression 6. Un turbocompresseur 8 comprend un compresseur 10 situé entre les conduits d'admission 4 et 6.

Le moteur 2 comporte un bloc-cylindres 12. En l'espèce, le bloc-cylindres 12 comprend trois cylindres 14, 16 et 18. Chaque cylindre est doté de deux soupapes d'admission 20 et de deux soupapes d'échappement 22. Les soupapes d'admission 20 et les soupapes d'échappement 22 sont actionnées par des arbres à cames (non représentés). Les soupapes d'admission 20 permettent aux gaz circulant dans le conduit d'admission haute pression 6 de pénétrer dans les cylindres 14, 16 et 18.

Le moteur 2 comporte un conduit d'échappement haute pression 24 et un conduit d'échappement basse pression 26 situé en aval du conduit d'échappement haute pression 24. Le turbocompresseur 8 comprend une turbine 28 disposée entre les conduits 24 et 26.

Le moteur 2 comporte un conduit de recirculation 30 des gaz d'échappement, également connu sous la dénomination anglo-saxonne « Exhaust Gas Recirculation », ou sous l'acronyme correspondant « EGR ». Le conduit 30 raccorde les conduits 4 et 26. En d'autres termes, le conduit 30 est un conduit EGR basse pression. On ne sort toutefois pas du cadre de l'invention en envisageant un conduit EGR haute pression.

Le moteur 2 comporte un filtre à air 32 et une vanne d'admission 34 disposés sur le conduit 4. La vanne d'admission 34 permet de réguler le débit d'air admis dans le moteur 2. Le conduit 4 comporte un débitmètre 36 permettant de mesurer le débit massique d'air admis à travers la vanne 34, un capteur de pression 38 et un capteur de température 40.

Le moteur 2 comporte une vanne de réglage des gaz d'admission 42 et un refroidisseur des gaz d'admission suralimentés 44 disposés sur le conduit 6. Le conduit 6 comporte un capteur de pression 46 et un capteur de température 48.

Le moteur 2 comporte un capteur de pression 50 et un capteur de température 52 situés au niveau du collecteur d'admission du bloc-cylindres 12. Le moteur 2 comporte un catalyseur trois voies 54 et un filtre à particules essence 56 montés sur le conduit 26 en amont de la ramification avec le conduit de recirculation 30, et un autre catalyseur trois voies 58 monté sur le conduit 26 en aval de la ramification avec le conduit de recirculation 30.

Le moteur 2 comprend une vanne de réglage des gaz recyclés 60, également connue sous la dénomination anglo-saxonne vanne EGR, un filtre 62 et un refroidisseur 64 montés sur le conduit de recirculation 30. Le conduit de recirculation 30 comporte en outre un capteur de pression différentielle 66 qui mesure la différence de pression sur toute la longueur du conduit 30. Il faut que cette pression différentielle soit supérieure à un seuil minimum pour que les gaz d'échappement puissent remonter le conduit de recirculation 30 jusqu'à l'admission. Si l'ouverture de la vanne de réglage 60 ne suffit pas, il est possible de fermer un volet d'échappement (non représenté sur la figure 1), monté dans le conduit 26 en aval du point de prélèvement des gaz recirculés. La fermeture d'un tel volet permet de créer une contrepression et de pousser ainsi le passage des gaz d'échappement dans le conduit de recirculation 30 lorsque la dépression dans le conduit 4 ne suffit pas à les y aspirer.

Le moteur 2 comporte un conduit de contournement 68 s'étendant entre les conduits 4 et 6. Le conduit 68 est doté d'une vanne de décharge 70 également connue sous la dénomination anglo-saxonne « vanne pop off ». La vanne 70 s'ouvre dans le cas où la vanne d'admission 34 vient à se fermer brutalement, pour éviter que de l'air comprimé ne vienne traverser le compresseur 10 en sens inverse.

La turbine 28 est dotée d'une pluralité d'ailettes 72. Les ailettes 72 forment un angle variable avec une direction axiale (non référencée) du turbocompresseur 8. Le turbocompresseur 8 comprend un actionneur 73 (représenté sur la figure 2) capable de modifier cet angle.

Le moteur 2 comprend une unité de contrôle électronique 74. L'unité de contrôle électrique 74 comprend un dispositif de régulation 76 ayant pour fonction de réguler la température $T_{apc}$ en aval du compresseur 10. La température $T_{apc}$ correspond la température du flux de fluide mesurée par le capteur 48, et est communément dénommée « température après compresseur ».

Dans la présente demande, sauf lorsqu'il en est indiqué autrement, on entend par l'expression « température amont » ou « pression amont » la température ou la pression, respectivement, du fluide situé en amont du compresseur 10. De même, sauf mention contraire, on entend par l'expression « température aval » ou « pression aval » la température ou la pression, respectivement, du fluide situé en aval du compresseur 10. Dans l'exemple illustré, la température aval est la température après compresseur $T_{apc}$ et la température amont est la température avant compresseur $T_{avc}$.

En référence à la figure 2, le dispositif 76 comprend le capteur 40. En d'autres termes, le dispositif 76 comprend un moyen déterminant la température aval $T_{apc}$.

Le dispositif 76 comporte un module d'élaboration 78. Le module d'élaboration 78 a pour fonction d'élaborer une consigne permettant de réguler la température aval $T_{apc}$. Le module d'élaboration 78 délivre une consigne de pression aval $P_{apc}$, ce qui permet d'agir sur la température aval $T_{apc}$.

Le dispositif 76 comporte un moyen d'actionnement 80. Le moyen d'actionnement 80 est capable de modifier la pression aval $P_{apc}$. En particulier, le moyen d'actionnement 80 peut comprendre l'actionneur 73.

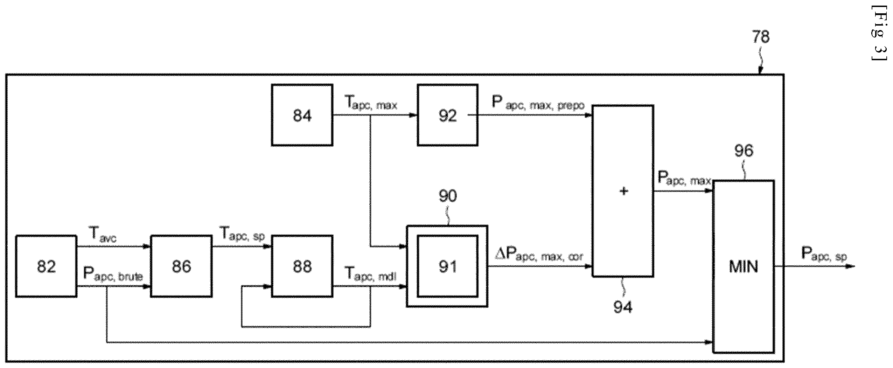

En référence à la figure 3, on a schématiquement représenté le module d'élaboration 78 du dispositif de régulation 76 de la figure 2.

Le module d'élaboration 78 comprend un bloc de réception 82 capable de recevoir une pluralité de données d'entrée. En l'espèce, le bloc de réception 82 est en communication d'informations avec le capteur de température 40. Ainsi, le bloc de réception 82 est capable de connaître la température avant compresseur $T_{avc}$, qui correspond à la température amont. En outre, le bloc de réception 82 est en communication d'informations avec l'unité de contrôle électronique 74, de manière à pouvoir recevoir une pré-consigne de pression après compresseur $P_{ape,brute}$. La pré-consigne $P_{ape,brute}$ est une consigne de la pression aval avant limitation par stratégie.

Le module d'élaboration 78 comporte un bloc de réception 84 d'une température limite aval $T_{apc,max}$. A cet égard, le bloc de réception 84 peut être en communication d'informations avec l'unité de contrôle électronique 74, dans laquelle la température $T_{apc,max}$ est pré-paramétrée.

Le module d'élaboration 78 comporte un bloc de calcul 86 capable de calculer une consigne de température après compresseur $T_{apc,sp}$ en fonction de la température avant compresseur $T_{avc}$ et de la pré-consigne de pression aval $P_{apc,brute}$. A cet égard, le bloc de calcul 86 est en communication d'informations avec le bloc de réception 82.

Plus particulièrement, pour calculer la consigne $T_{apc,sp}$, le bloc de calcul 86 utilise le rendement du compresseur défini par l'équation :

[Math 1]

$$\eta_c = \frac{T_{apc,is} - T_{avc}}{T_{apc} - T_{avc}}$$

où $\eta_c$ est le rendement isentropique du compresseur 10, qui en l'espèce est estimé par calibration, et $T_{apc}$, is est la température aval isentropique.

Dans le même temps, la pression et la température dans une transformation isentropique sont liées par l'équation :

[Math 2]

$$T_{apc,is} \times P_{apc}^{\frac{1-\gamma}{\gamma}} = T_{avc} \times P_{avc}^{\frac{1-\gamma}{\gamma}}$$

où y est le coefficient isentropique du gaz traversant le compresseur 10.

En combinant les équations (1) et (2), on obtient l'expression de la consigne $T_{apc,sp}$ :

[Math 3]

$$T_{apc,sp} = T_{avc}\left(1 - \frac{1}{\eta_c}\left(1 - \left(\frac{P_{apc,sp}}{P_{avc}}\right)^{\frac{\gamma-1}{\gamma}}\right)\right)$$

Le module d'élaboration 78 comprend un bloc de calcul 88 capable de calculer une consigne $T_{apc,md1}$ de température aval modélisée pour tenir compte d'un temps de réponse du capteur 40. Le bloc de calcul a pour fonction de modéliser une dynamique de la température des gaz traversant le compresseur 10. En l'espèce, le bloc de calcul 88 tient compte de la consigne $T_{apc,sp}$ déterminée par le bloc de calcul 86. En outre, le bloc de calcul 88 est doté d'une boucle de retour permettant de corriger la valeur de la consigne $T_{apc,md1}$.

Plus particulièrement, pour calculer la consigne $T_{apc,md1}$, le bloc de calcul 88 met en œuvre un filtre du premier ordre :

[Math 4]

$$\frac{dT_{apc,mdl}}{dt} = \frac{1}{\tau}(T_{apc,sp} - T_{apc,mdl})$$

où $\tau$ est un temps de réponse estimé du capteur 40, estimé par calibration sur banc moteur et sur des transitoires importants.

Le module d'élaboration 78 comprend un bloc de calcul 90. Le bloc de calcul 90 calcule un terme de correction $\Delta P_{apc,max,cor}$ en tenant compte de la consigne de température modélisée $T_{apc,md1}$ déterminée par le bloc de calcul 88 et de la température limite aval $T_{apc,max}$ reçue par le bloc de réception 84. Ce faisant, le bloc de calcul 90 s'assure que la température est mise en contrôle dans toutes les conditions malgré les dispersions du modèle, des mesures et des pièces. En particulier, les dispersions du modèle comprennent des dispersions dans l'estimation des rendements compresseurs et coefficient isentropique, et les dispersions des mesures comprennent des dispersions concernant la température avant compresseur qui est la résultante d'un bilan enthalpique sur plusieurs mesures pouvant avoir chacun un temps de réponse mal connu.

A cet égard, le bloc de calcul 90 comprend un contrôleur, en l'espèce un contrôleur proportionnel intégral 91.

Ainsi on obtient le terme de correction par l'équation :

[Math 5]

$$\Delta P_{apc,max,cor}$$
$$= k_p \times \left(T_{apc,max} - T_{apc,mdl}\right)$$
$$+ k_i \times \int \left(T_{apc,max} - T_{apc,mdl}\right)$$

où les gains $k_i$ et $k_p$ sont choisis pour obtenir un temps de réponse de la régulation s'assurant d'une bonne fiabilité des composants. Les méthodes de calibration des gains $k_i$ et $k_p$ s'appuient sur le temps de réponse $\tau$ précité. En particulier, lors de la calibration des gains $k_i$ et $k_p$, la pression maximale dynamique ne doit jamais être supérieure à 0 afin de s'assurer que l'on ne décontraint pas trop le régulateur. On évite ainsi un temps de réponse trop lent lorsque la température après compresseur augmente rapidement.

Le module d'élaboration 78 comporte un bloc de calcul 92 capable de déterminer une pression aval maximale avant correction $P_{apc,max,prepo}$ en fonction de la température limite aval $T_{apc,max}$ reçue par le bloc de réception 84 et de la température amont $T_{avc}$ reçue par le bloc de réception 82. Le bloc de calcul 92 tient également compte de la pression amont mesurée par le capteur 40. Ce faisant, le bloc de calcul 92 prépositionne la pression de suralimentation maximale correspondant à la température limite aval $T_{apc,max}$.

Plus particulièrement, le bloc de calcul 92 calcule la pression $P_{apc,max,prepo}$ en inversant l'équation (3) :

[Math 6]

$$P_{apc,max,prepo} = P_{avc} \left( \frac{(T_{apc,max} - T_{avc})}{T_{avc}} \eta_c + 1 \right)^{\frac{\gamma}{\gamma-1}}$$

Le module d'élaboration 78 comporte un sommateur 94. Le sommateur 94 est en communication d'informations avec les blocs de calcul 90 et 92. Plus particulièrement, le sommateur 94 est configuré pour calculer une pression aval maximale corrigée $P_{apc,max}$ comme la somme de la pression aval maximale avant correction $P_{apc,max,prepo}$ calculée par le bloc de calcul 92 avec le terme de correction $\Delta P_{apc,max,cor}$ calculé par le bloc de calcul 90 :

[Math 7]

$$P_{apc,max} = P_{apc,max,prepo} + \Delta P_{apc,max,cor}$$

Le module d'élaboration 78 comporte un bloc de sélection 96. Le bloc de sélection 96 est en communication d'informations avec le bloc de réception 82 et avec le sommateur 94. Plus particulièrement, le bloc de sélection 96 est configuré pour sélectionner la valeur minimale entre la pré-consigne de pression aval $P_{apc,brute}$ reçue par le bloc de réception 82 et la pression aval maximale $P_{apc,max}$ calculée par le sommateur 94. En résultat, le bloc de sélection 96 délivre une consigne de pression aval destinée au moyen d'actionnement 80.

Grâce à cet agencement, le module d'élaboration 78 est capable d'élaborer la consigne destinée à être mise en œuvre par le moyen d'actionnement 80.

Au vu de ce qui précède, l'invention permet de réguler la température après compresseur de manière très simple, en ne nécessitant qu'un faible nombre de calibrations et en évitant de devoir incorporer un actionneur supplémentaire, tout en ayant un faible impact en termes de pollution et en évitant d'occasionner des désagréments conducteurs tels qu'une coupure du moteur complet.

## Revendications

1. Dispositif de régulation (76) d'une température aval d'un flux de fluide traversant un compresseur (10) d'un moteur à combustion interne (2) de véhicule automobile, comprenant un moyen de détermination (40) d'une température ($T_{avc}$) du flux de fluide, un module d'élaboration (78) d'une consigne et un moyen d'actionnement (73) apte à modifier un paramètre du flux de fluide en tenant compte de la consigne, **caractérisé en ce que** le module d'élaboration (78) est configuré pour déterminer une consigne de pression aval ($P_{apc,sp}$) du flux de fluide en tenant compte d'une température limite aval ($T_{apc,max}$) et de la température ($T_{avc}$) déterminée par le moyen de détermination (40), le moyen d'actionnement (73) étant apte à modifier une pression aval du flux de fluide.

2. Dispositif (76) selon la revendication 1, dans lequel le moyen d'actionnement comprend un actionneur (73) mécaniquement connecté avec au moins une ailette (72) de turbine (28) à géométrie variable du moteur à combustion interne (2).

3. Dispositif (76) selon la revendication 1 ou 2, dans lequel le moyen de détermination (78) comprend un capteur (40) d'une température amont ($T_{avc}$) du flux de fluide.

4. Dispositif (76) selon l'une quelconque des revendications 1 à 3, dans lequel le module d'élaboration (78) comprend un bloc de réception (82) d'une pré-consigne de pression aval ($P_{apc,brute}$), le module d'élaboration (78) étant apte à calculer une pression aval maximale ($P_{apc,max}$) en tenant compte de la pré-consigne de pression aval ($P_{apc,brute}$) et de la température limite aval ($T_{apc,max}$), le module d'élaboration comprenant un bloc de sélection (96) configuré pour calculer la consigne ($P_{apc,sp}$) en sélectionnant la valeur minimale parmi la pression aval maximale ($T_{apc,max}$) et la pré-consigne de pression aval ($P_{apc,brute}$).

5. Dispositif (76) selon la revendication 4, dans lequel le module d'élaboration (78) comprend un premier bloc de calcul (92) apte à déterminer une pression aval maximale avant correction ($P_{apc,max,prepo}$) en fonction de la température limite aval ($T_{apc,max}$), un deuxième bloc de calcul (90) apte à calculer un terme de correction ($\Delta P_{apc,max,cor}$) en tenant compte de la température limite aval ($T_{apc,max}$), et un sommateur (94) configuré pour calculer la pression aval maximale ($P_{apc,max}$) comme la somme de la pression aval maximale avant correction ($P_{apc,max,prepo}$) calculée par le premier bloc de calcul (92) et du terme de correction ($\Delta P_{apc,max,cor}$) calculé par le deuxième bloc de calcul (90).

6. Dispositif (76) selon la revendication 5, dans lequel le deuxième bloc de calcul (90) comprend un correcteur proportionnel intégral (91).

7. Dispositif (76) selon la revendication 4 ou 5, dans lequel le module d'élaboration (78) comprend un troisième bloc de calcul (88) d'une consigne de température aval modélisée ($T_{apc,md1}$) pour tenir compte d'un temps de réponse du moyen de détermination (40), le deuxième bloc de calcul (90) étant configuré pour calculer le terme de correction ($\Delta P_{apc,max,cor}$) en tenant compte de la consigne de température aval modélisée ($T_{apc,md1}$) calculée par le troisième bloc de calcul (88).

8. Dispositif (76) selon la revendication 7, dans lequel le module d'élaboration (78) comprend un quatrième bloc de calcul (86) d'une consigne de température aval ($T_{apc,sp}$) en fonction de la température ($Tavc$) déterminée par le moyen de détermination (40) et de la pré-consigne de pression aval ($P_{apc,brute}$), le troisième bloc de calcul (88) étant configuré pour calculer la consigne de température aval modélisée ($T_{apc,md1}$) en fonction de la consigne de température aval ($T_{apc,sp}$) calculée par le quatrième bloc de calcul (86).

9. Procédé de régulation d'une température aval d'un flux de fluide traversant un compresseur (10) incorporé dans un moteur à combustion interne (2) de véhicule automobile, comprenant la détermination d'une température ($T_{avc}$) du flux de fluide, l'élaboration d'une consigne de pression aval ($P_{apc,sp}$) en tenant compte d'une température limite aval ($T_{apc,max}$) et de la température ($T_{avc}$) déterminée, et l'actionnement d'un moyen d'actionnement (73) apte à modifier une pression aval en tenant compte de la consigne ($P_{apc,sp}$) déterminée.

10. Programme d'ordinateur comprenant un code configuré pour, lorsqu'il est exécuté par un processeur ou une unité de contrôle électronique, mettre en œuvre le procédé selon la revendication 9.

[Fig 1]

[Fig 2]

[Fig 3]

Europäisches Patentamt

European Patent Office

Office européen des brevets

**RAPPORT DE RECHERCHE EUROPEENNE**

Numéro de la demande

EP 21 15 2070

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/074492 A1 (CHI JOHN N [US] ET AL) 28 mars 2013 (2013-03-28) | 1-3,9,10 | INV. F02D41/14 F02D23/02 |
| A | * alinéas [0054], [0062] - [0069], [0076] - [0079], [0085] - [0088]; figures 1,2,4,5,7,8,10,12 * | 4-8 | ADD. F02B37/24 |
| | ----- | | |
| X | FR 2 854 437 A1 (RENAULT SA [FR]) 5 novembre 2004 (2004-11-05) | 1-3,9,10 | |
| A | * page 8, ligne 11 - page 11, ligne 29; figures * | 4-8 | |
| | ----- | | |
| X | FR 2 930 597 A1 (RENAULT SAS [FR]) 30 octobre 2009 (2009-10-30) | 1-3,9,10 | |
| A | * page 6 - page 8; figures 1,2,6 * | 4-8 | |
| | ----- | | |
| A | FR 2 955 613 A1 (PEUGEOT CITROEN AUTOMOBILES SA [FR]) 29 juillet 2011 (2011-07-29) * alinéa [0032] - alinéa [0037]; figures 3,5 * | 1-10 | |
| | ----- | | DOMAINES TECHNIQUES RECHERCHES (IPC) |
| A | WO 2019/243675 A1 (PSA AUTOMOBILES SA [FR]) 26 décembre 2019 (2019-12-26) * page 5 - page 9; figures * | 1-10 | F02B F02D |
| | ----- | | |

Le présent rapport a été établi pour toutes les revendications

| Lieu de la recherche | Date d'achèvement de la recherche | Examinateur |
|---|---|---|
| Munich | 31 mai 2021 | Aign, Torsten |

**ANNEXE AU RAPPORT DE RECHERCHE EUROPEENNE
RELATIF A LA DEMANDE DE BREVET EUROPEEN NO.**

EP 21 15 2070

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-05-2021

| Document brevet cité au rapport de recherche | Date de publication | Membre(s) de la famille de brevet(s) | Date de publication |
|---|---|---|---|
| US 2013074492 A1 | 28-03-2013 | AUCUN | |
| FR 2854437 A1 | 05-11-2004 | AUCUN | |
| FR 2930597 A1 | 30-10-2009 | EP 2279340 A1<br>FR 2930597 A1<br>JP 2011518990 A<br>US 2011036333 A1<br>WO 2009138658 A1 | 02-02-2011<br>30-10-2009<br>30-06-2011<br>17-02-2011<br>19-11-2009 |
| FR 2955613 A1 | 29-07-2011 | AUCUN | |
| WO 2019243675 A1 | 26-12-2019 | EP 3810915 A1<br>FR 3082887 A1<br>WO 2019243675 A1 | 28-04-2021<br>27-12-2019<br>26-12-2019 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3330520 A